# EUROPÄISCHE PATENTSCHRIFT

(11) **EP 2 271 980 B1**
(45) Veröffentlichungstag und Bekanntmachung des Hinweises auf die Patenterteilung: **09.05.2012**
(21) Anmeldenummer: 09732686.2
(22) Anmeldetag: 11.03.2009
(51) Int. Cl.: G06F 7/58

(54) **VORRICHTUNG UND VERFAHREN ZUM ERZEUGEN EINER ZUFALLSBITFOLGE**
DEVICE AND METHOD FOR GENERATING A RANDOM BIT SEQUENCE
DISPOSITIF ET PROCÉDÉ DE PRODUCTION D'UNE SÉQUENCE ALÉATOIRE DE BITS

(30) Priorität: 14.04.2008 DE 102008018678
(43) Veröffentlichungstag der Anmeldung: 12.01.2011
(73) Patentinhaber: Siemens Aktiengesellschaft, 80333 München (DE)
(72) Erfinder: DICHTL, Markus, 80636 München (DE)
(86) Internationale Anmeldenummer: PCT/EP2009/052851
(87) Internationale Veröffentlichungsnummer: WO 2009/127475

(56) Entgegenhaltungen:
- WO-A-2006/015624
- WO-A1-2009/109959
- US-A1- 2005 004 960
- KEERAT BRAR ET AL: "True Random Number Generators" COURSE CRYPTOGRAPHY AND COMPUTER NETWORK-SECURITY ECE646, FALL 2007, GEORGE MASON UNIVERSITY, DEPARTMENT OF ELECTRICAL AND COMPUTER ENGINEERING, FAIRFAX VIRGINIA, USA, 19. Dezember 2007 (2007-12-19), Seiten 1-5, XP007908847

## Beschreibung

Die vorliegende Erfindung betrifft Vorrichtungen und Verfahren zum Erzeugen von Zufallsbits und Zufallsbitfolgen. Dies dient beispielsweise zur Implementierung eines Zufallszahlengenerators.

Zufallszahlen, welche in digitaler Form als Zufallsbitfolgen auftreten, werden häufig in sicherheitsrelevanten Anwendungen benötigt. Es ist beispielsweise bei asymmetrischen Authentifikationsverfahren notwendig, Zufallszahlen zu erzeugen und zu verwenden. Insbesondere bei RFID-Tags mit Sicherheitsfunktionalität sind entsprechende Zufallszahlen mit besonders niedrigem Hardwareaufwand zu generieren. Wünschenswert ist es dabei, lediglich digitale Logikschaltungen, welche aufwandsgünstig implementiert werden können, einzusetzen.

In der Vergangenheit wurden Zufallszahlengeneratoren zum Beispiel unter Verwendung analoger Rauschquellen, deren Signale digitalisiert werden, verwendet. Hybride Analog/Digital-Schaltungen sind jedoch nur aufwändig zu implementieren.

Ein Zufallszahlengenerator, der praktisch ausschließlich digitale Logikschaltungen aufweist, ist in der WO 2006/015624 A1 beschrieben. In dieser internationalen Patentanmeldung wird vorgeschlagen, zufällige Phasenschwankungen von aus digitalen Gattern aufgebauten Ringoszillatoren zu verwenden. Gemäß der W0 2006/015624 A1 eignen sich jedoch lediglich sehr spezielle Ringoszillatoren, nämlich Fibonacci- oder Galois-Ringoszillatoren mit besonderen Eigenschaften zum Einsatz in einen Zufallszahlengenerator. Bei einem derart aufgebauten Schaltkreis wird davon ausgegangen, dass die Ringoszillatoren keine Fixpunkte aufweisen dürfen. Diese Bedingung kann insbesondere für Fibonacci- oder Galois-Oszillatorschaltkreise durch mathematische Gleichungen dargestellt werden, die gemäß der W0 2006/015624 A1 erfüllt sein müssen. Bei einer entsprechenden Implementierung ist daher zunächst zu prüfen, ob ein Ringoszillator Fixpunkte aufweist. Nachteilig ist damit die Auswahl von in Frage kommenden Oszillatorschaltkreisen sehr eingeschränkt.

Die Druckschrift Keerat Brar, et al.: "True Random Number Generators", Course Cryptography and Computer Network Security ECE646, Fall 2007, George Manson University, Department of Electrical and Computer Engineering, Fairfax, Virginia, USA, Seiten 1 - 5, Dezember 2007 offenbart einen Fibonacci-Ringoszillator mit einem Rückkoppelpfad, mithilfe dessen Pseudo-Zufallszahlen erzeugt werden können.

Die Druckschrift WO 2009/109959 A1 offenbart ein System zur Pseudo-Zufallszahlenerzeugung mit einer Ringoszillatorschaltung, welche verschiedene Konfigurationen aufweisen kann, und einer Randomisierungskomponente, welche zwischen den Konfigurationen der Ringoszillatorschaltung in Abhängigkeit von einem Strom an Pseudo-Zufallszahlen alterniert.

Es ist daher eine Aufgabe der vorliegenden Erfindung, eine verbesserte Vorrichtung zum Erzeugen von Zufallsbits zu schaffen.

Diese Aufgabe wird durch eine Vorrichtung mit den Merkmalen des Patentanspruchs 1 gelöst.

Demgemäß weist eine Vorrichtung zum Erzeugen einer Zufallsbitfolge einen digitalen Ringoszillatorschaltkreis mit mindestens einem ersten Rückkopplungspfad und einem zweiten Rückkopplungspfad auf. Dabei erfolgt zu vorgebbaren Zeitpunkten eine Umschaltung zwischen den Rückkopplungspfaden, und an einem Ausgangsknoten des Ringoszillatorschaltkreises ist ein Zufallssignal mit einem zufälligen Pegelverlauf abgreifbar. Der Ringoszillatorschaltkreis weist ferner einen Eingangsknoten auf, und ist derart ausgestaltet, dass bei einem Zustandswechsel eines an den Eingangsknoten gekoppelten logischen Startsignals eine Oszillation erfolgt.

Bei digitalen Ringoszillatorschaltungen ist in der Regel eine ungerade Anzahl von logischen Gattern rückgekoppelt. Das heißt, der Ausgang eines der logischen Gatter ist mit dem Eingang eines anderen logischen Gatters verknüpft. Dadurch können Oszillationen entstehen, die unter bestimmten Bedingungen nicht voraussagbare Signalformen annehmen, also Zufallssignale darstellen. Es ist nun vorgesehen, mehrere mögliche Rückkopplungspfade vorzusehen, zwischen denen umgeschaltet werden kann. Dadurch lässt sich eine verbesserte zufällige Signaleigenschaft des Zufallssignals erzielen. Durch die Umschaltung, welche veränderte Oszillationseigenschaften des Ringoszillators hervorrufen, lassen sich damit ohne größeren Aufwand Zufallsbits erzeugen.

Durch thermische oder quantenmechanische Vorgänge innerhalb der zur Implementierung des Oszillators verwendeten Halbleiterbauelemente entstehen zum Beispiel Phasenschwankungen oder Jitter, welche zufällige interne Signal- oder Potenzialverläufe hervorrufen. Die logischen Bauelemente, beispielsweise eine ungerade Anzahl von Inverterschaltungen, können zum Beispiel zum Ausbilden eines Ringoszillators kaskadenförmig zu einem Ring gekoppelt sein. In der Regel hängt die grundlegende Oszillationsfrequenz von der Anzahl der verwendeten Inverter- oder Logikschaltungen ab. Durch unterschiedlich auftretende Verzögerungen bei der Signalverarbeitung durch die einzelnen logischen Bauelemente stellt sich in der Regel keine konstante Phase sondern ein Jitter ein, so dass häufig unregelmäßige Signalformen auftreten.

Es kann jedoch nicht grundsätzlich davon ausgegangen werden, dass auch für lange Zeiträume immer ein absolut zufälliger "Schwingungsverlauf" vorliegt. Jeder Ringoszillatorschaltkreis weist in seinem Signalverlauf nach dessen Aktivierung beziehungsweise Starten zufällige zeitliche Pegelverläufe auf, die prinzipiell allerdings auch nach einem Einschwingvorgang in einem deterministischen Verlauf münden können.

Durch das Umschalten der Rückkopplungspfade wird jedoch das Einschwingen in beispielsweise einen Fixpunkt verhindert. Es kann zum Beispiel taktgesteuert oder periodisch die jeweilige Rückkopplung des Ringoszillatorschaltkreises verändert werden. Selbst wenn das Grundkonzept des jeweiligen Ringoszillators zu periodischen Schwingungen neigt, und dieser daher zunächst ungeeignet erscheint, Zufallssignale zu erzeugen, erreicht man durch die Umschaltung, dass derartige potentiell periodische Schwingungen gestört werden. Es stellt sich dadurch immer ein nicht periodisches zufälliges Schwingungsverhalten ein, aus dem eine große Entropie zum weiteren Erzeugen von zufälligen Bitwerten gewonnen werden kann. Es ist dabei auch möglich, kürzere Fibonacci- oder Galois-Ringoszillatoren einzusetzen, wodurch der Hardware- und Implementierungsaufwand reduziert wird. Eine Umschaltung erfolgt zum Beispiel derart, dass zwischen mindestens zwei verschiedenen Galoisbeziehungsweise Fibonacci-Rückkoppelungen umgeschaltet wird. Die Vorrichtung zum Erzeugen einer Zufallsbitfolge hat daher insbesondere den Vorteil, dass sie einfach zu implementieren ist und Berechnungen, wie sie beispielsweise beim Stand der Technik zum Ausschließen eines Fixpunktes notwendig sind, nicht durchgeführt werden müssen. Als Ringoszillatorschaltkreise kommt damit eine größere Klasse von Oszillatoren in Frage. Ferner haben allgemeine Ringoszillatoren, die in dem einen oder anderen Betriebszustand, welcher abhängig von der eingestellten Rückkopplung ist, den Vorteil, dass selbst bei Erreichen des Fixpunktes, was bei der vorgeschlagenen Vorrichtung zum Erzeugen einer Zufallsbitfolge für die Güte der Zufälligkeit unschädlich ist, der Energieverbrauch stark zurückgeht. Dies trifft insbesondere bei einer Implementierung der entsprechenden Schaltungsanordnungen in CMOS-Technologie zu.

Die Umschaltung zwischen Rückkopplungspfaden ermöglicht die Verwendung von nur wenigen seriell verschalteten logischen Bauelementen. Dadurch wird eine zusätzliche Energieeinsparung erzielt. Es ist zum Beispiel in einem Ausführungsbeispiel lediglich eine Schalteinrichtung zusätzlich vorgesehen, welche zu vorgegebenen Zeitpunkten eine Umschaltung des Rückkopplungspfades vornimmt. Dies kann zum Beispiel in Abhängigkeit von einem Schaltsignal erfolgen. Das Schaltsignal entspricht vorzugsweise einem Takt, wodurch eine Umschaltung zwischen den Rückkopplungspfaden periodisch vorgenommen wird.

Durch die besonders aufwandsgünstige Implementierung, die vorzugsweise ausschließlich digitale Bauelemente aufweist, ist eine Realisierung in der Art einer FPGA-Schaltung besonders günstig. Unter einem FPGA versteht man programmierbare integrierte Schaltkreise in der Digitaltechnik. FPGAs können durch eine Konfiguration interner Strukturen, die logische Gatter bilden können, "im Feld" programmiert werden (FPGA = Field Programable Gate Array). Selbstverständlich kann die entsprechende Vorrichtung zum Erzeugen von Zufallszahlen auch als anwendungsspezifische integrierte Schaltung (ASIC = Application Specific Integrated Circuit) ausgeführt werden, zum Beispiel in CMOS. Die gegenüber üblichen Schaltungsanordnungen zum Erzeugen von Zufallssignalen verbesserte Vorrichtung kann auch aus diskreten Bauelementen aufgebaut werden, wenn zum Beispiel eine bereits eingesetzter älterer Zufallsbitgenerator ersetz oder umgebaut wird, um die Zufälligkeit des erzeugten Signals zu erhöhen.

In einer Ausführungsform der Vorrichtung ist ein an den Ausgangsknoten gekoppeltes Zwischenspeicherelement vorgesehen, welches in Abhängigkeit von dem Zufallssignal einen logischen Pegel speichert.

Es ist zum Beispiel möglich, ein Zwischenspeicherelement als Flip-Flop auszubilden, welches beim Durchlaufen eines vorbestimmbaren logischen Schwellwertes seinen internen abgespeicherten Zustand wechselt. Bekannte Flip-Flops wechseln zum Beispiel den intern abgespeicherten logischen Zustand bei jeder steigenden oder fallenden Signalflanke des eingekoppelten Zufallssignals. Das heißt, sofern das Zufallssignal zwischen zwei logischen Pegeln unregelmäßig schwankt, liefert das Zwischenspeicherelement einen Zufallsbitwert, der von der nicht bestimmbaren Anzahl von beispielsweise steigenden oder fallenden Flanken des Zufallssignals abhängt. Beispielsweise kann das Zwischenspeicherelement einen dem Zufallssignal entsprechenden logischen Pegel speichern.

Es ist dabei denkbar, dass das Zwischenspeicherelement, wie beispielsweise ein Flip-Flop, in Abhängigkeit von einem Abtastsignal einen dem Zufallssignal entsprechenden logischen Pegel speichert. Ein Abtastsignal, beispielsweise ein externes Taktsignal, führt dazu, dass zu bestimmten Zeitpunkten der Pegel des Zufallssignals von dem Zwischenspeicherelement erfasst wird und entweder als Zufallsbit verwendet wird oder auch ein Invertieren des gespeicherten logischen Pegels im Zwischenspeicherelement hervorruft. Das Schaltsignal zum Umschalten zwischen den Rückkopplungspfaden kann vorzugsweise eine höhere Frequenz aufweisen als das Abtastsignal. Ebenso denkbar ist jedoch auch, dass Das Startsignal, das Umschaltsignal und das Abtastsignal dieselbe Frequenz haben und synchron oder gegeneinander zeitlich versetzt sind. Letzteres hat den Vorteil, dass nicht unterschiedliche Signalerzeugungseinrichtungen für die Signale notwendig sind.

Ein entsprechendes Startsignal zum Neustarten des Ringoszillators kann zum Beispiel von einer Rechtecksignalerzeugungseinrichtung geliefert werden, welche ein Startsignal mit wechselnden logischen Pegeln erzeugt. Insofern wird der eingesetzte Ringoszillatorschaltkreis regelmäßig neu gestartet und zeigt ein zufälliges Einschwingverhalten.

In einer bevorzugten Ausführungsform der Vorrichtung ist eine Steuerungseinrichtung vorgesehen, welche zum Beispiel gemäß einer Programmierung ein Abgreifen eines Zufallsbitwertes an dem Ausgangsknoten oder Zwischenspeicherelement und/oder die Erzeugung des Startsignals und/oder des Umschaltsignals veranlasst.

Die Erzeugung einer Zufallsbitfolge kann insbesondere durch Invertieren eines an den Ausgangsknoten angeschlossenen Flip-Flops bei jedem 0-1-Durchgang des Zufallssignals erfolgen, wobei die Zufallsbits auch durch periodisches Sampeln oder Abtasten des zwischengespeicherten logischen Pegels dieses Flip-Flops bestimmbar sind.

Die Erfindung sieht auch eine Verwendung eines digitalen Ringoszillatorschaltkreises mit mindestens einem ersten Rückkopplungspfad und einem zweiten Rückkopplungspfad vor. Dabei wird ein jeweiliger Rückkopplungspfad zu vorgegebenen Zeitpunkten umgeschaltet, und an einem Ausgangsknoten des Ringoszillators ist ein Zufallssignal mit einem zufälligen Pegelverlauf abgreifbar. Dies dient dem Erzeugen mindestens eines Zufallsbits.

In einer Weiterbildung der Erfindung ist ein Zufallszahlengenerator mit einer vorbeschriebenen Vorrichtung zum Erzeugen einer Zufallsbitfolge vorgeschlagen. Diese kann zum Beispiel in einem RFID-Chip eingesetzt werden. Der Chip weist dann eine Vorrichtung zur Erzeugung einer Zufallsbitfolge und einer Kryptographieeinrichtung auf, wobei mehrere von dem Zufallssignal abgeleitete Zufallsbits von der Kryptographieeinrichtung zur Durchführung einer kryptographischen Authentikation, zur Erzeugung einer kryptografischen Signatur und/oder zur Erzeugung eines kryptographischen Schlüssels verwendet werden.

Die Erfindung betrifft ferner ein Verfahren zum Erzeugen einer Zufallsbitfolge gemäß Patentanspruch 17.

Demgemäß ist ein Verfahren zum Erzeugen einer Zufallsbitfolge vorgeschlagen, bei dem in Abhängigkeit von einem Pegelverlauf eines an einem digitalen Ringoszillatorschaltkreis abgegriffenen Zufallssignal Zufallsbitwerte bestimmt werden vor, wobei der verwendete digitale Ringoszillatorschaltkreis mindestens einen ersten Rückkopplungspfad und einen zweiten Rückkopplungspfad aufweist. Zu vorgegebenen Zeitpunkten erfolgt ein Umschalten zwischen den Rückkopplungspfaden. Dabei ist an einem Ausgangsknoten des Ringoszillatorschaltkreises ein Zufallssignal mit einem zufälligen Pegelverlauf abgreifbar. Der Ringoszillatorschaltkreis weist ferner einen Eingangsknoten auf, und ist derart ausgestaltet, dass bei einem Zustandswechsel eines an den Eingangsknoten gekoppelten logischen Startsignals eine Oszillation erfolgt.

In einer Variante der Verfahrens werden dabei die folgenden Verfahrensschritte durchgeführt: Aktivieren eines digitalen Ringoszillatorschaltkreises, Umschalten zwischen dem ersten und dem zweiten Rückkopplungspfad, und Abgreifen eines oder mehrerer Pegelwerte eines von dem Ringoszillatorschaltkreis erzeugten oszillierenden Zufallssignals.

Das entsprechende Verfahren kann zum Beispiel durch geeignete Programmierung programmierbarer digitaler Logikschaltungen, wie beispielsweise FPGAs implementiert werden. Ein Aktivieren des Ringoszillatorschaltkreises kann zum Beispiel durch Einschalten oder Ankoppeln einer geeigneten Versorgungsspannung an die entsprechende Schaltungsanordnung erfolgen. Ferner ist ein Aktivieren entsprechend einer jeweiligen Implementierung der Ringoszillatorschaltung durch Ankoppeln eines geeigneten

Steuer- oder Startsignals möglich. Unter Aktivieren ist ein Vorgang zu verstehen, der in einer Oszillation des Ringoszillatorschaltkreises, vorzugsweise ausgehend von einem vorgegebenen Startzustand der eingesetzten Logikgatter, resultiert.

Dabei kann der Ringoszillatorschaltkreis zum Erzeugen mehrerer Zufallsbitwerte mehrfach aktiviert werden. Die vorgeschlagenen Verfahrensschritte können dabei zeitlich unabhängig voneinander durchgeführt werden. Insbesondere die Umschaltvorgänge zwischen den Rückkopplungspfaden fördern dabei die Randomisierung im Pegelverlauf.

Wie bereits hinsichtlich der Vorrichtung zum Erzeugen einer Zufallsbitfolge erläutert wurde, kann das Zufallssignal mehrfach abgetastet werden und in Abhängigkeit von einem jeweiligen Pegelwert des Zufallssignals ein logischer Pegel eines Zufallsbits verändert werden. Dies kann beispielsweise durch ein Zwischenspeicherelement wie zuvor beschrieben wurde erzielt werden.

Weitere vorteilhafte Ausgestaltungen der Erfindung sind Gegenstand der Unteransprüche sowie der im Folgenden beschriebenen Ausführungsbeispiele.

Im Folgenden wird die Erfindung unter Bezugnahme auf die beigelegten Figuren und anhand einiger Ausführungsbeispiele näher erläutert. Es zeigt dabei:
- Fig. 1: ein Ausführungsbeispiel eines Zufallszahlengenerators;
- Fig. 2: eine erste Ausführungsform eines Ringoszillatorschaltkreises;
- Fig. 3: einen Verlauf eines Zufallssignals der ersten Ausführungsform eines Ringoszillatorschaltkreises;
- Fig. 4: eine zweite Ausführungsform eines Ringoszillatorschaltkreises;
- Fig. 5: einen Verlauf eines Zufallssignals der zweiten Ausführungsform eines Ringoszillatorschaltkreises;
- Fig. 6: eine dritte Ausführungsform eines Ringoszillatorschaltkreises; und
- Fig. 7: ein beispielhaftes Ablaufdiagramm eines Verfahrens zum Erzeugen von Zufallsbitfolgen.

In den Figuren sind gleiche oder funktionsgleiche Elemente mit denselben Bezugszeichen versehen worden, sofern nichts anderes angegeben ist.

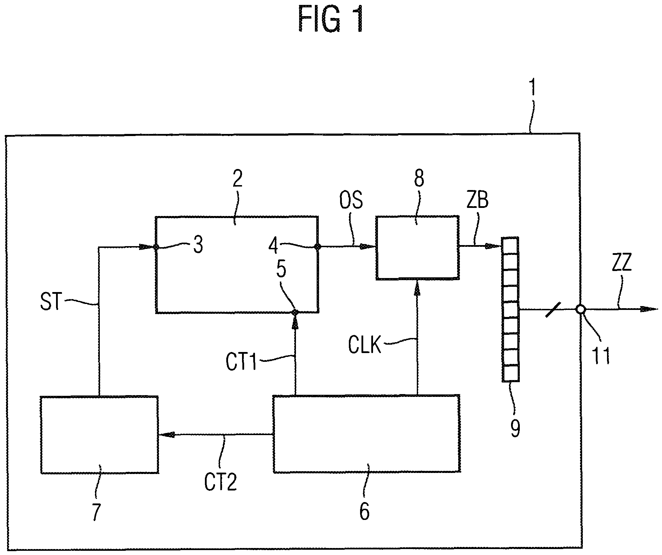

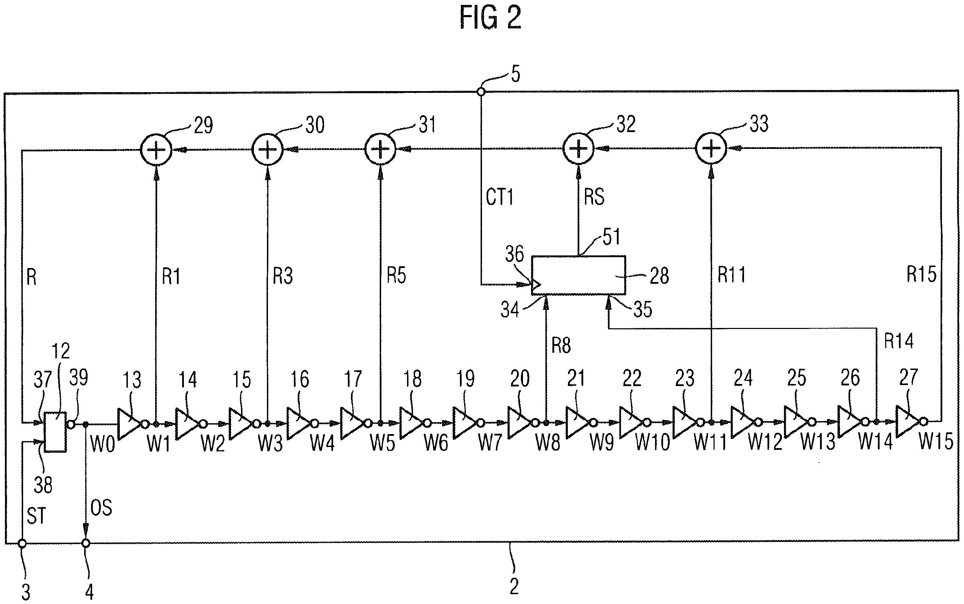

In der Fig. 1 ist beispielhaft ein Zufallszahlengenerator 1 dargestellt. Der Zufallszahlengenerator 1 weist einen Ringoszillatorschaltkreis 2 mit einem Eingangsknoten 3 und einem Ausgangsknoten 4 auf. Ausführungsbeispiele für Ringoszillatoren sind zum Beispiel in den folgenden Fig. 2, 4 und 6 näher erläutert.

Beispielsweise kann ein Ringoszillator durch kaskadierte Verschaltung mehrerer Inverter realisiert werden. Inverter oder auch andere logische Bauelemente dienen dabei als Verzögerungselemente, wobei nicht vorhersagbare Schwankungen der einzelnen Verzögerungszeiten nicht vorhersagbare Oszillationsvariationen, so genannte Jitter, hervorrufen. Die Verzögerungsschwankungen beruhen in der Regel auf verschiedenen internen und externen Rauschfaktoren, wie beispielsweise die Hardwareimplementierung der Bauelemente und Strom-, Spannungs- und/oder Temperaturschwankungen. Sofern, wie es bei Inverter oder logischen Gattern der Fall ist, die Verzögerungszeit extrem kurz ist, liefern diese nichtvorhersagbaren Fluktuationen zufällige Pegelverläufe des prinzipiell oszillierenden Signals, welches an dem Ausgangsknoten 4 als Zufallssignal OS abgreifbar ist.

Der Ringoszillator 2 weist ferner einen Anschluss 5 für ein Umschaltsignal CT1 auf. Intern hat der Ringoszillatorschaltkreis wie bereits oben angedeutet seriell oder kaskadiert verschaltete logische Bauelemente, die jedoch über mindestens zwei verschiedene Rückkopplungspfade rückkoppelbar sind. In Abhängigkeit von dem Umschaltsignal CT1 erfolgt eine Veränderung des Rückkopplungspfades im Ringoszillator 2. Damit ist eine zusätzliche Randomisierung geschaffen, da beim Verändern des jeweiligen Rückkopplungspfades eine Störung der sich einstellenden Signalverläufe erfolgt.

Der Ringoszillatorschaltkreis 2 lässt sich durch ein geeignetes Startsignal ST, welches dem Eingangsknoten 3 eingekoppelt ist, aktivieren beziehungsweise starten. Es ist prinzipiell möglich, dass der Ringoszillatorschaltkreis 2 aufgrund seines internen Aufbaus einen Fixpunkt aufweist, das heißt stabile Zustände existieren, in denen die logischen Bauelemente logische Zustände aufweisen, die sich zeitlich nicht mehr ändern. Bis zum Erreichen eines derartigen Fixpunktes erfolgt jedoch eine praktisch zufällige Veränderung der entsprechenden abgreifbaren Pegel. Zudem wird durch die Umschaltung und damit Veränderung der Schaltungstopologie des Ringoszillators 2 in der Regel verhindert, dass überhaupt ein stabiler Zustand innerhalb des Ringoszillators entsteht.

Das Zufallssignal OS ist einem Zwischenspeicherelement 8, zum Beispiel einer Flip-Flop-Einrichtung, zugeführt. Die Flip-Flop-Einrichtung 8, beispielsweise ein D-Flip-Flop, nimmt an einem Dateneingang das Zufallssignal an und liefert an einem Datenausgang einen zwischengespeicherten logischen Pegel als Zufallsbit ZB. Da das Zufallssignal OS zeitlich fluktuiert und zufällig schwankt, ist zum Beispiel denkbar, dass durch Einkoppeln eines Abtastsignals, beispielsweise in der Form eines Taktsignals CLK, an einen Takteingang des Flip-Flop 8, der zum Abtastzeitpunkt also zum Beispiel beim Vorliegen einer steigenden oder fallenden Taktflanke, gegenwärtige Wert des Zufallssignals OS erfasst beziehungsweise zwischenspeichert wird.

Ein entsprechendes Abtast- oder Taktsignal CLK wird in der beispielhaften Darstellung der Fig. 1 durch eine Steuereinrichtung 6 geliefert. Die Steuereinrichtung 6 erzeugt ebenfalls ein geeignetes Umschaltsignal CT1, welches zum Umschalten des Rückkopplungspfades im Ringoszillatorschaltkreis 2 an dessen Anschluss 5 geführt ist, und ein Steuersignal CT2, um einen Rechtecksignalgenerator 7, der das Startsignal ST an den Eingangsknoten 3 des Ringoszillators 2 liefert, zu steuern.

Durch beispielsweise periodisches Umschalten zwischen den Rückkopplungspfaden und damit den inhärenten Oszillationseigenschaften des Ringoszillatorschaltkreises 2 sind potentiell vorhandene Fixpunkte unkritisch für die Zufallszahl beziehungsweise Zufallsbiterzeugung. Durch das Vorsehen mehrerer Kopplungsmöglichkeiten beziehungsweise Pfade und die Umschaltung zwischen denselben, wird in der Regel nur das Einschwingverhalten, welches nicht deterministisch erfolgt, beim Abgreifen des Zufallssignals OS berücksichtigt. Insofern eignet sich zum Einsatz als Ringoszillatorschaltkreis jeder konventionelle Ringoszillator, der dahingehend modifiziert wird, dass mehrere alternative Rückkopplungspfade vorgesehen werden, zwischen denen umgeschaltet werden kann.

Es sind verschiedene Ausführungsbetriebsmodi des Zufallszahlengenerators 1 denkbar. Zum Beispiel kann, wie zuvor beschrieben wurde, zu jedem Abtastzeitpunkt das Zufallssignal OS durch das Zwischenspeicherelement 8 erfasst werden und als ein Zufallsbit ZB ausgegeben werden. Dies wird beispielsweise in ein Schieberegister 9 eingeführt. Nach einer vorgegebenen Anzahl von Abtastzeitpunkten liegt damit eine Zufallsbitfolge in dem Schieberegister 9 vor. Alternativ kann, auch wenn es in der Fig. 1 nicht explizit dargestellt ist, auch das Schieberegister durch das Taktsignal CLK angesteuert werden. An einem Ausgang 11 des Zufallszahlengenerators 1 ist dann eine binär kodierte Zufallszahl ZZ abgreifbar, deren binäre Stellen beispielsweise taktweise auslesbar sind.

Alternativ kann das Zwischenspeicherelement oder Flip-Flop 8 auch derart ausgestaltet sein, dass bei jedem 0-1- oder auch 1-0-Durchgang des Zufallssignals OS der intern gespeicherte Wert des Zufallsbits ZB im Zwischenspeicherelement 8 geändert wird. Damit wird als zusätzliches zufälliges Element die Anzahl der Schwankungen oder Oszillationen des Zufallssignals OS zur Erzeugung eines Zufallsbits verwendet. In Abhängigkeit von dem Abtast- oder Taktsignal CLK wird dann der zufällig erzeugte Pegelzustand im Zwischenspeicherelement 8 als Zufallsbit ZB ausgegeben.

Es ist weiterhin denkbar, vor jeder Zufallsbiterzeugung den Ringoszillatorschaltkreis 2 zurückzusetzen beziehungsweise erneut zu starten, um die Gefahr des Erreichens eines Fixpunktes zu reduzieren. Vorzugsweise wird bei dem Rücksetzen oder Initialisieren des Ringoszillatorschaltkreises vorgegeben, dass der Startzustand, also die logischen Pegel aller logischen und digitalen Bauelemente, welche in dem Ringoszillatorschaltkreis 2 verwendet werden, nicht dem eines Fixpunktzustandes entsprechen.

Im Folgenden sind beispielhafte Ringoszillatorschaltkreise mit umschaltbaren Rückkopplungspfaden näher erläutert, welche sich zum Einsatz in einer Vorrichtung zur Erzeugung von Zufallsbitfolgen eignen.

Der Figur 2 ist ein Ringoszillatorschaltkreis 2 dargestellt, der sechzehn seriell verschaltete logische Bauelemente 12-27 aufweist. Dabei ist das nullte logische Bauelement als NAND-Gatter 12 ausgeführt und die übrigen logischen Bauelemente 13-27 als Inverterstufen. Diese Anordnung ist äquivalent zu 16 seriell angeordneten Inverter-Gattern. Die jeweiligen Ausgangssignale sind als W0-W15 bezeichnet. Das erste logische Bauelemente 12, also das NAND-Gatter hat zwei Eingänge 37 und 38, wovon der zweite Eingang 38 an den Eingangsknoten 3 des Ringoszillators 2 verbunden ist. An den Eingangsknoten 3 ist ein Startsignal ST gekoppelt. Am Ausgang 39 des NAND-Gatters 12 ist das Zufallssignal OS abgreifbar, welches an den Ausgangsknoten 4 des Ringoszillators 2 geführt ist.

Das Ausgangssignal W15 des letzten, also fünfzehnten Inverters 27 ist als ein äußeres Rückkopplungssignal R15 dem Eingang 37 des NAND-Gatters 12 zugeführt. Neben diesem äußeren Rückkopplungspfad R sind ferner an den Ausgängen des ersten Inverters 13, des dritten Inverters 15, des fünften Inverters 15, des achten Inverters 20, des elften Inverters 23 und des vierzehnten Inverters 26 die jeweilige Ausgangssignale W1, W3, W5, W8, W11 und W14 abgegriffen und liegen als potentielle Rückkopplungssignale R1, R3, R5, R8, R11 und R14 bereit.

Die Rückkopplungssignale R1, R3, R5 und R11 sind über Addierer 29, 30, 31, 33 dem äußeren Rückkopplungssignal R15 aufaddiert und bilden damit feste unveränderbare Rückkopplungspfade. Die ebenfalls vorliegenden Rückkopplungssignale R8 und R14 lassen sich über eine Schalteinrichtung 28 ebenfalls als Rückkopplungspfade schalten. Dazu sind die Rückkopplungssignale R8 und R14 an Eingänge 34, 35 einer Schalteinrichtung 28 geführt, welche in Abhängigkeit von dem Schaltsignal CT1, welches über den Schalteingang 5 der Ringoszillatorschaltung 2 anliegt, an ihrem Ausgang 51 ein geschaltetes Rückkopplungssignal RS liefert. Das geschaltete Rückkopplungssignal RS ist über einen Addierer 32 dem äußeren Rückkopplungspfad R15, welcher mit dem Rückkopplungssignal R11 über den Addierer 33 gekoppelt ist, aufaddiert. Die als Addierer 29, 30, 31, 32, 33 dargestellten Bauelemente entsprechen logischen XOR-Bauelementen.

Die Schalteinrichtung 28 kann zum Beispiel als Multiplexer aufgefasst werden. Es ist somit möglich, über die Schalteinrichtung 28 zwischen den beiden Rückkopplungspfaden R8 und R14 umzuschalten. Durch eine Umschaltung im Betrieb des Ringoszillatorschaltkreises, also während sich eine in der Regel zufällige Oszillation oder Schwingung in dem Signalpfad durch die Kette von logischen Bauelementen 12-27 einstellt, wird dieselbe gestört, wodurch eine weitere Randomisierung des insbesondere am Ausgang des ersten logischen Bauelementes 12 vorliegenden Zufallssignals OS bewirkt wird. Der in der Figur 2 dargestellte Ringoszillator entspricht im Wesentlichen einem Fibonacci-Ringoszillator der Länge 16, der mit der folgenden Rückkopplungsfunktion dargestellt werden kann:
WO = NOT{W15 XOR [(W14 AND CT2) OR (W8 AND NOT CT2)] XOR W3 XOR W11 XOR W5 XOR W11 XOR W1}, mit Wi+1 = NOT Wi.

Das Zufallssignal OS erhält dadurch praktisch vollständig zufälliges Verhalten.

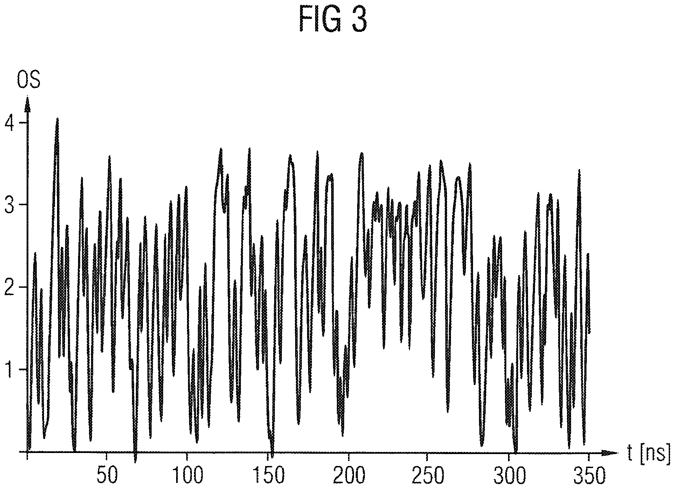

In der Figur 3 ist beispielsweise der Signalverlauf des Zufallssignals OS für einen als FPGA-implementierten Ringoszillator gemäß Figur 2 dargestellt. Dabei wurde davon ausgegangen, dass eine Umschaltung zwischen den beiden möglichen Rückkopplungspfaden R8 und R14 alle 10 ns erfolgt. Dies kann zum Beispiel über eine geeignete Realisierung des Schaltsignals CT1 implementiert werden. Zum Beispiel kann der Schalteingang 36 des Multiplexers oder der Schalteinrichtung 28 mit einem entsprechenden Taktsignal als Schaltsignal bestückt werden. Der in der Figur 3 dargestellte Signalverlauf ist in Abhängigkeit von der Zeit t in ns dargestellt. Das Signal ist als Spannungsverlauf in beliebigen Einheiten angegeben.

Man erkennt, dass keinerlei periodische oder deterministische Signalverläufe sichtbar sind. Durch das Umschalten zwischen den verschiedenen Rückkopplungssignalpfaden wird jegliches sich einstellendes Schwingungsverhalten derart gestört, dass, wie in der Figur 3 dargestellt ist, ein zufälliger Signalverlauf entsteht. Wie oben erläutert, kann durch geeignetes Abgreifen oder Zwischenspeichern dieses Zufallssignals OS ein jeweiliges Zufallsbit abgeleitet werden.

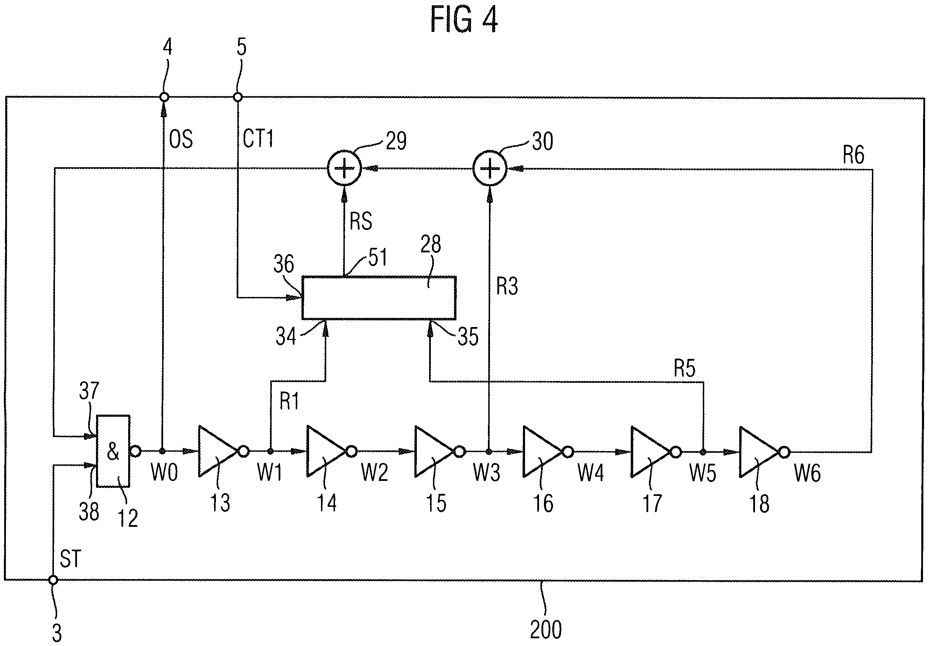

In der Figur 4 ist eine zweite Ausführungsform eines Ringoszillators 200 dargestellt. Der Ringoszillator 200 ist ebenfalls als Fibonacci-Ringoszillator, allerdings mit sieben Invertern, ausgeführt. Dabei ist der erste Inverter wiederum als NAND-Gatter 12 ausgeführt, an den sechs seriell verschaltete Inverter 13-18 angeschlossen sind. Hinsichtlich der Signalbezeichnungen gilt das für die Figur 2 Gesagte. Prinzipiell ähnelt der Aufbau des Ringoszillators 200 dem in der Figur 2 dargestellten Ringoszillator, wobei auf gleiche Elemente nicht erneut eingegangen wird.

Es ist an dem Ausgang des ersten Inverters beziehungsweise NAND-Gatters 12 das Zufallssignal OS abgreifbar und dem Ausgangsknoten 4 zugeführt. An den Ausgängen der Inverter 13, 15, 17 und 18 sind entsprechende Rückkopplungssignale R1, R3, R5 und R6 abgreifbar. Das letztere Rückkopplungssignal R6 dient als äußeres Rückkopplungssignal und wird dem Eingang 37 des NAND-Gatters 12 zugeführt. Ferner lassen sich die Rückkopplungspfade R1 und R2 über die Schalteinrichtung 28 untereinander umschalten, so dass prinzipiell unterschiedliche Fibonacci-Ringoszillator-Architekturen entstehen. Das Rückkopplungssignal R3 ist fest über einen Addierer beziehungsweise ein XOR-Gatter 30 dem äußeren Rückkopplungssignal R6 aufaddiert.

In Abhängigkeit von einem Schaltsignal CT1 wird entweder das Rückkopplungssignal R1 oder das Rückkopplungssignal R5 als geschaltetes Rückkopplungssignal RS ebenfalls dem äußeren Rückkopplungssignal R6 über einen Addierer beziehungsweise ein XOR-Gatter 29 aufaddiert. Es ergeben sich somit wiederum zwei mögliche Rückkopplungspfade, die entweder vom Ausgang des ersten Inverters 13 zum Eingang 37 des NAND-Gatters führen oder ein Rückkopplungspfad, der von dem Ausgang des fünften Inverters zum Eingang 37 des NAND-Gatters 12 führt.

Durch Pegelwechsel des Startsignals RS lässt sich der Ringoszillator 200 anstoßen und beginnt eine zufällige Schwingung. Da nur sieben Inverter beziehungsweise logische Bauelemente vorgesehen sind, ergibt sich prinzipiell eine sehr hohe Frequenz der Schwingungen, die beispielsweise am Ausgang des NAND-Gatters als Zufallssignal abgegriffen werden können. Um zu verhindern, dass sich stabile Schwingungen oder Fixpunkte einstellen können, wird ebenfalls mit relativ hoher Frequenz zwischen den Rückkopplungspfaden umgeschaltet. Dies kann durch die Einstellung der Periode oder des Taktes beziehungsweise der Frequenz des Schaltsignals CT1 eingestellt werden.

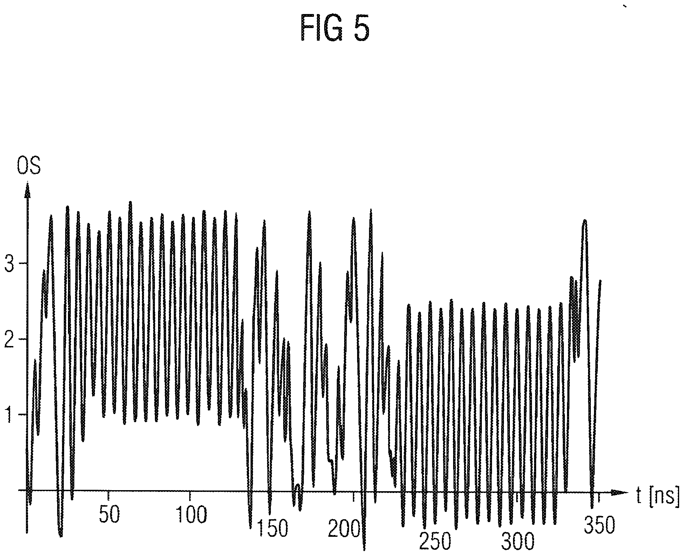

In der Figur 5 ist der Signalverlauf analog der Figur 3 für das Zufallssignal OS des Ringoszillators 200 dargestellt. Die in der Figur 5 dargestellte Kurve entspricht dem Fall, bei dem alle 100 ns zwischen den beiden alternativen Rückkopplungspfaden R1 und R3 umgeschaltet wird. Man kann erkennen, dass sich zum Beispiel im Bereich zwischen 50 und 120 ns eine quasiperiodische Schwingung einstellt. Durch Umschaltung auf den jeweils anderen Rückkopplungspfad, also eine Veränderung der Schwingungseigenschaften des sich ergebenden Fibonacci-Ringoszillators etwa bei 125 ns, wird dieses quasi periodische Verhalten jedoch gestört, so dass sich eine relativ hohe Entropie in dem sich zufällig ergebenden Signalverlauf einstellt. Durch das beispielsweise periodische Umschalten, ergibt sich ein komplexes nichtperiodisches Verhalten des Zufallssignals OS, welches, wie zuvor beschrieben wurde, geeignet ist, Zufallsbitwerte zu erzeugen.

Untersuchungen der Anmelderin haben ergeben, dass insbesondere bei Ringoszillatorschaltungen, die ≥ 7 logische Bauelemente kaskadiert vorsehen, eine zuverlässige zufällige Signalausbeute ermöglichen. Vorzugsweise sind jedoch mehr als 10 in Serie verschaltete logische Bauelemente vorzusehen.

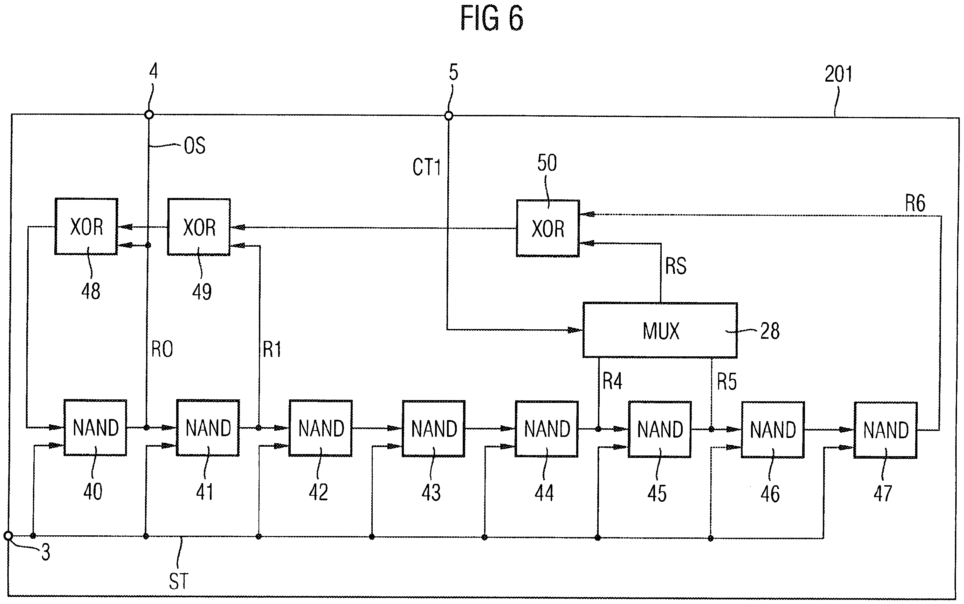

In der Figur 6 ist ein weiteres Beispiel für die Implementierung eines Ringoszillators 201 dargestellt. Dabei sind acht NAND-Gatter 40-47 kaskadiert vorgesehen. An jeweils einen der Eingänge der NAND-Gatter 40-47 ist das Startsignal ST angekoppelt. Dabei ist das am Ausgang des nullten NAND-Gatters 40 vorliegende Zufallssignal OS ebenfalls als inneres Rückkopplungssignal R0 verwendet. Ein weiteres Rückkopplungssignal R1 am Ausgang des ersten NAND-Gatters 41 realisiert einen weiteren Rückkopplungspfad neben dem äußeren Rückkopplungspfad, welcher durch das Rückkopplungssignal R6 gegeben ist. Die jeweiligen Rückkopplungssignale sind über XOR-Gatter 48, 49 aufaddiert.

Ferner sind zwei mögliche alternative Rückkopplungspfade vorgesehen, die sich durch die am Ausgang des vierten und fünften NAND-Gatters 44, 45 vorliegenden Signale R4, R5 ergeben. Als schaltbares Rückkopplungssignal RS, welches von einem Multiplexer 28 in Abhängigkeit von dem Schaltsignal CT1 geliefert wird, ergibt sich somit eine Rückkopplung durch das Rückkopplungssignal R4 oder R5. Durch das Startsignal und die Verwendung von NAND-Gattern als logische Bauelemente kann bei einem Wechsel von 0 auf 1, also bei einer steigenden logischen Flanke des Startsignals ST, die Ringoszillatorschaltung 201 aktiviert oder gestartet werden.

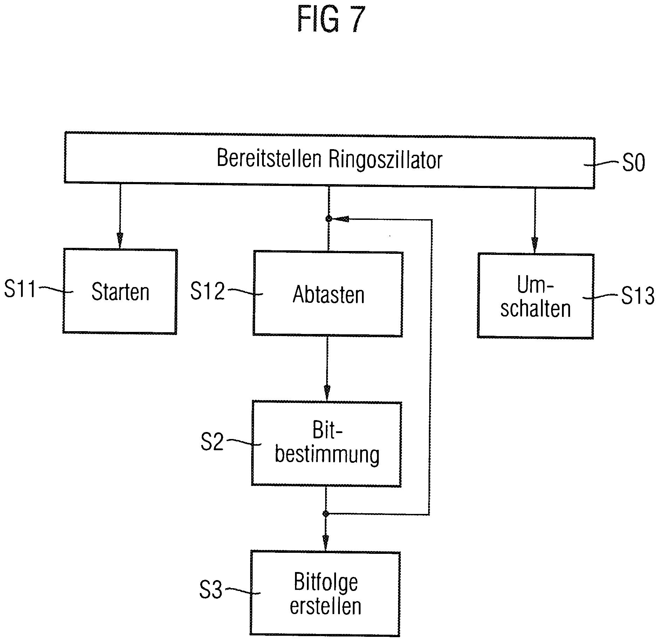

In der Figur 7 ist schließlich ein beispielhaftes Ablaufdiagramm für ein Verfahren zum Erzeugen von Zufallsbitfolgen schematisch dargestellt. Wie bereits zuvor beschrieben, eignet sich insbesondere ein Ringoszillator gemäß der Ausführungsbeispiele in den Figuren 2, 4 oder 6 zum Erzeugen von Zufallssignalen. Somit wird in einem optionalen Vorbereitungsschritt S0 ein entsprechender Ringoszillator bereitgestellt, der derart ausgestaltet ist, dass zwischen mehreren Rückkopplungspfaden umgeschaltet werden kann.

In prinzipiell zeitlich unabhängig voneinander ablaufenden Verfahrensschritten S11, S12 und S13 wird der entsprechende Ringoszillator, beispielsweise der in der Figur 2 dargestellte, gestartet (Schritt S11). Das Zufallssignal OS wird abgetastet (Schritt S12), um daraus einen Zufallsbitwert abzuleiten, was im Folgeschritt S2 geschieht. Zeitlich parallel dazu erfolgt kontinuierlich zu vorgegebenen Zeitpunkten eine Umschaltung zwischen den potentiell vorliegenden Rückkopplungspfaden im Schritt S13.

Aus den bestimmten beziehungsweise vom Zufallssignal OS abgeleiteten Zufallsbits, zum Beispiel im Schritt S2, kann anschließend im Schritt S3 eine Zufallsbitfolge erstellt werden. Diese Zufallsbitfolge entspricht einer binär codierten Zufallszahl, welche für weitere Anwendungen bereitsteht.

Wie bereits angedeutet, kann das Starten des Ringoszillators das Abtasten des Zufallssignals OS und die Umschaltung zwischen verschiedenen Rückkopplungspfaden zeitlich unabhängig erfolgen. Es ist möglich, die Umschaltung häufiger vorzunehmen als ein Abtasten des Zufallssignals erfolgt. Wie bereits hinsichtlich der Figur 1 dargestellt und erläutert wurde, sind mehrere Varianten des Abtastens und Ableitens des einzelnen Zufallsbit möglich. Grundsätzlich sollte die Umschaltfrequenz für den Wechsel von einem ersten zu einem zweiten Rückkopplungspfad derart gewählt werden, dass zwischenzeitlich keine stabile periodische Schwingung vorliegt. Dies kann beispielsweise durch vorherige Experimente oder Simulationen ermittelt werden. Prinzipiell ist davon auszugehen, dass je weniger logische Bauelemente im Ringoszillatorschaltkreis vorliegen, desto höher die notwendige Umschaltfrequenz sein muss, um sich potentiell einstellende periodische Schwingungen zu unterbrechen und zu stören.

Die Erfindung in Form der beispielhaft dargestellten Zufallszahlengeneratoren, Ringoszillatoren und Verfahrensabläufe erreicht eine zuverlässige Erzeugung von Zufallszahlen bei extrem geringem Hardwareaufwand. Die Zufallsbitfolgen oder Zufallszahlen erreichen eine hohe statistische Qualität und können zum Beispiel bei Verschlüsselungsverfahren oder Authentifizierungsalgorithmen, insbesondere auch auf RFID-Chips, eingesetzt werden.

## Patentansprüche

1. Vorrichtung (1) zum Erzeugen einer Zufallsbitfolge mit einem digitalen Ringoszillatorschaltkreis (2), welcher mindestens einen ersten Rückkopplungspfad (R8) und einen zweiten Rückkopplungspfad (R14) aufweist, und welcher derart ausgestaltet ist, dass zu vorgebbaren Zeitpunkten eine Umschaltung zwischen den Rückkopplungspfaden (R8, R14) erfolgt, wobei an einem Ausgangsknoten (4) des Ringoszillatorschaltkreises (2) ein Zufallssignal (OS) mit einem zufälligen Pegelverlauf abgreifbar ist,
**dadurch gekennzeichnet, dass**
der Ringoszillatorschaltkreis (2) ferner einen Eingangsknoten (3) aufweist, und derart ausgestaltet ist, dass bei einem Zustandswechsel eines an den Eingangsknoten (3) gekoppelten logischen Startsignals (ST) eine Oszillation erfolgt.

2. Vorrichtung (1) nach Anspruch 1, wobei eine Schalteinrichtung (28) vorgesehen ist, welche zu vorgegebenen Zeitpunkten eine Umschaltung des Rückkopplungspfades (RS) vornimmt.

3. Vorrichtung (1) nach Anspruch 2, wobei die Schalteinrichtung (28) in Abhängigkeit von einem Schaltsignal (CT1) zwischen den Rückkopplungspfaden (R8, R14) umschaltet.

4. Vorrichtung (1) nach einem der Ansprüche 1 - 3, wobei eine Umschaltung periodisch erfolgt.

5. Vorrichtung (1) nach einem der Ansprüche 1 - 4, wobei der Ringoszillatorschaltkreis (2) mehrere seriell verschaltete logische Bauelemente (12-27) aufweist.

6. Vorrichtung (1) nach Anspruch 5, wobei mindestens sieben seriell verschaltete logische Bauelemente (12-27) vorgesehen sind.

7. Vorrichtung (1) nach Anspruch 5 oder 6, wobei die logischen Bauelemente (13-27) Inverter sind.

8. Vorrichtung (1) nach einem der Ansprüche 1 - 7, wobei die Vorrichtung (1) ein an den Ausgangsknoten (4) gekoppeltes Zwischenspeicherelement (8) aufweist, welches in Abhängigkeit von dem Zufallssignal (OS) einen logischen Pegel speichert.

9. Vorrichtung (1) nach Anspruch 7 oder 8, wobei das Zwischenspeicherelement (8) in Abhängigkeit von einem Abtastsignal (CLK) einen dem Zufallssignal (OS) entsprechenden logischen Pegel speichert.

10. Vorrichtung (1) nach Anspruch 9, wobei die Vorrichtung (1) eine Abtastsignalerzeugungseinrichtung (6) aufweist, welche zu vorgegebenen Zeitpunkten einen logischen Zustandswechsel des Abtastsignals (CLK) erzeugt.

11. Vorrichtung (1) nach einem der Ansprüche 1 - 10, wobei die Vorrichtung (1) eine an den Eingangsknoten (3) gekoppelte Rechtecksignalerzeugungseinrichtung (7) aufweist, welche das Startsignal (ST) mit wechselnden logischen Pegeln erzeugt.

12. Vorrichtung (1) nach einem der Ansprüche 1 - 11, wobei die Vorrichtung (1) eine Steuerungseinrichtung (5) aufweist, welche gemäß einer Programmierung ein Abgreifen eines Zufallsbitwertes an dem Ausgangsknoten (4) oder Zwischenspeicherelement (8) und/oder die Erzeugung des Startsignals (ST) und oder des Schaltsignals (CT1) veranlasst.

13. Vorrichtung (1) nach einem der Ansprüche 1 - 12, wobei der Ringoszillatorschaltkreis (2) in der Art eines Galois-Ringoszillators oder Fibonacci-Ringoszillators ausgeführt ist.

14. Vorrichtung (1) nach einem der Ansprüche 1 - 13, wobei die Vorrichtung (1) als FPGA-Schaltung implementiert ist.

15. RFID-Chip mit einer Vorrichtung (1) nach einem der Ansprüche 1 - 14 und einer Kryptographieeinrichtung, wobei mehrere von dem Zufallssignal (OS) abgeleitete Zufallsbits (ZB) von der Kryptographieeinrichtung zur Durchführung einer kryptographischen Authentikation, zur Erzeugung einer kryptografischen Signatur und/oder zur Erzeugung eines kryptographischen Schlüssels verwendet werden.

16. Zufallszahlengenerator mit einer Vorrichtung (1) nach einem der Ansprüche 1 - 14, wobei mehrere an dem Ausgangsknoten (4) abgegriffene Pegelwerte des Zufallssignals (OS) oder von einem Zwischenspeicherelement (8) gespeicherte logische Pegel (ZB) als Bitwerte einer Zufallszahl (ZZ) erfasst werden.

17. Verfahren zum Erzeugen einer Zufallsbitfolge, bei dem in Abhängigkeit von einem Pegelverlauf eines an einem digitalen Ringoszillatorschaltkreis (2) abgegriffenen Zufallssignals (OS) Zufallsbitwerte (ZB) bestimmt werden, wobei der digitale Ringoszillatorschaltkreis (2) mindestens einen ersten Rückkopplungspfad (R8) und einen zweiten Rückkopplungspfad (R14) aufweist, und zu vorgebbaren Zeitpunkten eine Umschaltung zwischen den Rückkopplungspfaden (R8, R14) erfolgt, wobei an einem Ausgangsknoten (4) des Ringoszillatorschaltkreises (2) ein Zufallssignal (OS) mit einem zufälligen Pegelverlauf abgreifbar ist,
**dadurch gekennzeichnet, dass**
der Ringoszillatorschaltkreis (2) ferner einen Eingangsknoten (3) aufweist, und derart ausgestaltet ist, dass bei einem Zustandswechsel eines an den Eingangsknoten (3) gekoppelten logischen Startsignals (ST) eine Oszillation erfolgt.

18. Verfahren nach Anspruch 17, wobei die folgenden Schritte durchgeführt werden:
- Aktivieren (S1) eines digitalen Ringoszillatorschaltkreises (2);
- Umschalten (S2) zwischen dem ersten und dem zweiten Rückkopplungspfad (R8, R14);
- Abgreifen (S2, S21) eines oder mehrerer Pegelwerte eines von dem Ringoszillatorschaltkreis (2) erzeugten oszillierenden Zufallssignals (OS).

19. Verfahren nach Anspruch 17 oder 18, wobei der Ringoszillatorschaltkreis (2) zum Erzeugen mehrerer Zufallsbitwerte mehrfach aktiviert wird.

20. Verfahren nach einem der Ansprüche 17 - 19, wobei zwischen den Rückkopplungspfaden (R8, R14) periodisch umgeschaltet wird.

21. Verfahren nach einem der Ansprüche 17 - 20, wobei in Abhängigkeit von dem Verlauf des Zufallssignals (OS) ein Zufallsbitwert bestimmt wird (S21, S22).

## Claims

1. Device (1) for generating a random bit sequence with a digital ring oscillator circuit (2), having at least one first feedback path (R8) and one second feedback path (R14), and which is designed such that at predeterminable times a switchover occurs between the feedback paths (R8, R14), with a random signal (OS) with a random level history able to be tapped at an output node (4) of the ring oscillator circuit (2),
**characterised in that**
the ring oscillator circuit (2) also has an input node (3) and is designed such that an oscillation takes place when there is a change of state of a logical start signal (ST) coupled to the input node (3).

2. Device (1) according to claim 1, with a switching device (28) being provided which performs a switchover of the feedback path (RS) at predetermined times.

3. Device (1) according to claim 2, with the switching device (28) switching between the feedback paths (R8, R14) as a function of a switching signal (CT1).

4. Device (1) according to one of claims 1 - 3, with a switchover taking place periodically.

5. Device (1) according to one of claims 1 - 4, with the ring oscillator circuit (2) featuring a number of serially-connected logical components (12-27).

6. Device (1) according to claim 5, with at least seven serially-connected logical components (12-27) being provided.

7. Device (1) according to claim 5 or 6, with the logical components (13-27) being inverters.

8. Device (1) according to one of claims 1 - 7, with the device (1) having a buffer element (8) coupled to the output node (4), which stores a logical level as a function of the random signal (OS).

9. Device (1) according to claim 7 or 8, with the buffer element (8) storing a logical level corresponding to the random signal (OS) as a function of a sampling signal (CLK).

10. Device (1) according to claim 9, with the device (1) having a sample signal generation device (6) which generates a change in the logical state of the sampling signal (CLK) at predeterminable times.

11. Device (1) according to one of claims 1 - 10, with the device (1) featuring a square-wave generation device (7) coupled to the input node (3), which generates the start signal (ST) with changing logical levels.

12. Device (1) according to one of claims 1 - 11, with the device (1) featuring a control device (5) which, in accordance with programming, causes a random bit value to be tapped at the output node (4) or buffer element (8) and/or causes the start signal (ST) and/or the switching signal (CT1) to be generated.

13. Device (1) according to one of claims 1 - 12, with the ring oscillator circuit (2) being embodied in the form of a Galois ring oscillator or Fibonacci ring oscillator.

14. Device (1) according to one of claims 1 - 13, with the device (1) being implemented as an FPGA circuit.

15. RFID chip with a device (1) according to one of claims 1 - 14 and a cryptography device, with a number of random bits (ZB) derived from the random signal (OS) being used by the cryptographic device for performing a cryptographic authentication, for generating a cryptographic signature and/or for creating a cryptographic key.

16. Random number generator with a device (1) according to one of claims 1 - 14, with a number of level values of the random signal (OS) tapped at the output node (4) or logical levels (ZB) stored by a buffer element (8) being sampled as bit values or a random number (ZZ).

17. Method for generating a random bit sequence, in which, depending on a level history of a random signal (OS) tapped at a digital ring oscillator circuit (2), random bit (ZB) values are determined, with the digital ring oscillator circuit (2) having at least one first feedback path (R8) and one second feedback path (R14), and at predeterminable times a switchover taking place between the feedback paths (R8, R14), with a random signal (OS) with a random level history able to be tapped at an output node (4) of the ring oscillator circuit (2),
**characterised in that**
the ring oscillator circuit (2) also has an input node (3) and is designed such that an oscillation takes place when there is a change of state of a logical start signal (ST) coupled to the input node (3).

18. Method according to claim 17, with the following steps being performed:
- Activating (S1) a digital ring oscillator circuit (2);
- Switching (S2) between the first and the second feedback path (R8, R14);
- Tapping (S2, S21) one or more level values of an oscillating random signal (OS) generated by the ring oscillator circuit (2).

19. Method according to claim 17 or 18, with the ring oscillator circuit (2) being activated multiple times to generate a number of random bit values.

20. Method according to one of claims 17 - 19, with there being a periodic switchover between the feedback paths (R8, R14).

21. Method according to one of claims 17 - 20, with a random bit value being determined (S21, S22) as a function of the curve of the random signal (OS).

## Revendications

1. Dispositif (1) pour générer une séquence binaire aléatoire avec un circuit oscillateur annulaire numérique (2) qui comporte au moins un premier chemin de rétroaction (R8) et un deuxième chemin de rétroaction (R14) et qui est réalisé de manière telle qu'une commutation entre les chemins de rétroaction (R8, R14) se produit à des instants prédéterminables, un signal aléatoire (OS) avec une variation de niveau aléatoire pouvant être prélevé au niveau d'un noeud de sortie (4) du circuit oscillateur annulaire (2), **caractérisé en ce que** le circuit oscillateur annulaire (2) comporte en outre un noeud d'entrée (3) et est réalisé de manière telle qu'il se produit une oscillation en cas de changement d'état d'un signal logique de départ (ST) couplé au noeud d'entrée (3).

2. Dispositif (1) selon la revendication 1, un dispositif de commutation (28) étant prévu, lequel effectue une commutation du chemin de rétroaction (RS) à des instants prédéterminés.

3. Dispositif (1) selon la revendication 2, le dispositif de commutation (28) commutant en fonction d'un signal de commutation (CT1) entre les chemins de rétroaction (R8, R14).

4. Dispositif (1) selon l'une des revendications 1 à 3, une commutation se produisant périodiquement.

5. Dispositif (1) selon l'une des revendications 1 à 4, le circuit oscillateur annulaire (2) comportant plusieurs éléments logiques (12-27) montés en série.

6. Dispositif (1) selon la revendication 5, au moins sept éléments logiques montés en série (12-27) étant prévus.

7. Dispositif (1) selon la revendication 5 ou 6, les éléments logiques (13-27) étant des inverseurs.

8. Dispositif (1) selon l'une des revendications 1 à 7, le dispositif (1) comportant un élément de mémoire intermédiaire (8) qui est couplé au noeud de sortie (4) et qui stocke un niveau logique en fonction du signal aléatoire (OS).

9. Dispositif (1) selon la revendication 7 ou 8, l'élément de mémoire intermédiaire (8) stockant un niveau logique correspondant au signal aléatoire (OS) en fonction d'un signal de balayage (CLK).

10. Dispositif (1) selon la revendication 9, le dispositif (1) comportant un dispositif générateur de signaux de balayage (6) qui génère un changement d'état logique du signal de balayage (CLK) à des instants prédéterminés.

11. Dispositif (1) selon l'une des revendications 1 à 10, le dispositif (1) comportant un dispositif générateur de signaux rectangulaires (7) qui est couplé au noeud d'entrée (3) et qui génère le signal de départ (ST) avec des niveaux logiques changeants.

12. Dispositif (1) selon l'une des revendications 1 à 11, le dispositif (1) comportant un dispositif de commande (5) qui provoque, conformément à une programmation, un prélèvement d'une valeur binaire aléatoire au niveau du noeud de sortie (4) ou de l'élément de mémoire intermédiaire (8) et/ou la génération du signal de départ (ST) et/ou du signal de commutation (CT1).

13. Dispositif (1) selon l'une des revendications 1 à 12, le circuit oscillateur annulaire (2) étant réalisé à l'instar d'un oscillateur annulaire de Galois ou d'un oscillateur annulaire de Fibonacci.

14. Dispositif (1) selon l'une des revendications 1 à 13, le dispositif (1) étant implémenté en tant que circuit FPGA.

15. Puce RFID avec un dispositif (1) selon l'une des revendications 1 à 14 et un dispositif de cryptographie, plusieurs bits aléatoires (ZB) dérivés du signal aléatoire (OS) étant utilisés par le dispositif de cryptographie pour effectuer une authentification cryptographique, pour générer une signature cryptographique et/ou pour générer une clé cryptographique.

16. Générateur aléatoire avec un dispositif (1) selon l'une des revendications 1 à 14, plusieurs valeurs de niveau du signal aléatoire (OS) prélevées au niveau du noeud de sortie (4) ou niveaux logiques (ZB) stockés par un élément de mémoire intermédiaire (8) étant saisis en tant que valeurs binaires d'un nombre aléatoire (ZZ).

17. Procédé pour générer une séquence binaire aléatoire, dans lequel des valeurs binaires aléatoires (ZB) sont déterminées en fonction d'une variation de niveau d'un signal aléatoire (OS) prélevé au niveau d'un circuit oscillateur annulaire numérique (2), le circuit oscillateur annulaire numérique (2) comportant au moins un premier chemin de rétroaction (R8) et un deuxième chemin de rétroaction (R14) et une commutation entre les chemins de rétroaction (R8, R14) se produisant à des instants prédéterminables, un signal aléatoire (OS) avec une variation de niveau aléatoire pouvant être prélevé au niveau d'un noeud de sortie (4) du circuit oscillateur annulaire (2), **caractérisé en ce que** le circuit oscillateur annulaire (2) comporte en outre un noeud d'entrée (3) et est réalisé de manière telle qu'il se produit une oscillation en cas de changement d'état d'un signal logique de départ (ST) couplé au noeud d'entrée (3).

18. Procédé selon la revendication 17, les étapes suivantes étant exécutées :
- activation (S1) d'un premier circuit oscillateur annulaire (2) numérique ;
- commutation (S2) entre les premier et deuxième chemins de rétroaction (R8, R14) ;
- prélèvement (S2, S21) d'une ou plusieurs valeurs de niveau d'un signal aléatoire oscillant (OS) généré par le circuit oscillateur annulaire (2).

19. Procédé selon la revendication 17 ou 18, le circuit oscillateur annulaire (2) étant activé plusieurs fois pour générer plusieurs valeurs binaires aléatoires.

20. Procédé selon l'une des revendications 17 à 19, une commutation se produisant périodiquement entre les chemins de rétroaction (R8, R14).

21. Procédé selon l'une des revendications 17 à 20, une valeur binaire aléatoire étant déterminée (S21, S22) en fonction de l'évolution du signal aléatoire (OS).
